(19) Europäisches Patentamt
European Patent Office
Office européen des brevets

(11) Veröffentlichungsnummer: **0 337 207 A2**

## (12) EUROPÄISCHE PATENTANMELDUNG

(21) Anmeldenummer: **89105654.1**

(22) Anmeldetag: **30.03.89**

(51) Int. Cl.4: **C08G 63/62 , C08G 63/64 , C08G 63/24**

(30) Priorität: **12.04.88 DE 3812049**

(43) Veröffentlichungstag der Anmeldung: **18.10.89 Patentblatt 89/42**

(84) Benannte Vertragsstaaten: **DE FR GB IT NL**

(71) Anmelder: **BAYER AG**
**D-5090 Leverkusen 1 Bayerwerk(DE)**

(72) Erfinder: **Ebert, Wolfgang, Dr.**
**Doerperhofstrasse 31**
**D-4150 Krefeld(DE)**
Erfinder: **Meyer, Rolf-Volker, Dr.**
**Buchheimerstrasse 23**
**D-4150 Krefeld(DE)**
Erfinder: **Dhein, Rolf, Dr.**
**Deswatinesstrasse 30**
**D-4150 Krefeld(DE)**
Erfinder: **Oels, Udo, Dr.**
**Wallenburgdyk 101**
**D-4150 Krefeld(DE)**

# (54) Verfahren zur Herstellung von aromatischen Polycarbonaten, aromatischen Polyestercarbonaten und aromatischen Polyestern.

(57) Gegenstand der vorliegenden Erfindung ist ein Verfahren zur Herstellung von aromatischen Polycarbonaten, aromatischen Polyestercarbonaten und aromatischen Polyestern nach dem bekannten Zweiphasengrenzflächenverfahren, das dadurch gekennzeichnet ist, daß als organische Phase ein Gemisch aus aromatischen Kohlenwasserstoffen mit Alkanen und/oder Cycloalkanen eingesetzt wird.

EP 0 337 207 A2

## Verfahren zur Herstellung von aromatischen Polycarbonaten, aromatischen Polyestercarbonaten und aromatischen Polyestern

Gegenstand der vorliegenden Erfindung ist ein Verfahren zur Herstellung von aromatischen Polycarbonaten, aromatischen Polyestercarbonaten und aromatischen Polyestern nach dem bekannten Zweiphasengrenzflächenverfahren in Gegenwart von wäßriger und organischer Phase durch Umsetzung von Diphenolen mit Phosgen und/oder mit aromatischen Dicarbonsäuredihalogeniden, gegebenenfalls unter Mitverwendung von monofunktionellen Kettenabbrechern und gegebenenfalls unter Mitverwendung von dreifunktionellen oder mehr als dreifunktionellen Verzweigern, gegebenenfalls in Gegenwart von Katalysatoren und/oder gegebenenfalls in Anwesenheit von Reduktionsmitteln, das dadurch gekennzeichnet ist, daß als organische Phase eine Mischung aus 5 bis 95 Gew.-%, vorzugsweise 30 bis 90 Gew.-%, besonders bevorzugt 50 bis 85 Gew.-% an aromatischen Kohlenwasserstoffen mit 95 bis 5 Gew.-%, vorzugsweise 70 bis 10 Gew.-% und insbesondere 50 bis 15 Gew.-% an Alkanen und/oder an Cycloalkanen eingesetzt wird.

Die Herstellung von thermoplastischen Polycarbonaten nach dem Zweiphasengrenzflächenverfahren ist bekannt (siehe beispielsweise US-Patente 3 028 365 und 3 275 601). Hierbei können als organische Phase Benzin, Ligroin, Cyclohexan, Methylcyclohexan, Benzol, Toluol, Xylole u. a. eingesetzt werden (siehe beispielsweise US-PS 3 028 365, Spalte 2, Zeilen 45-48 in Verbindung mit Zeilen 32-35 von Spalte 2 und die Beispiele).

Die erfindungsgemäß einzusetzenden Mischungen von aromatischen Kohlenwasserstoffen mit Alkanen bzw. Cycloalkanen sind darin nicht beschrieben.

In der US-Patentschrift Nr. 3 112 292, die auf die Herstellung von linearen, kristallisierten Polycarbonaten gerichtet ist, kann die Herstellung nach dem Phasengrenzflächenverfahren zwar in Gegenwart von aromatischen Kohlenwasserstoffen wie Benzol, Toluol, Xylol (Spalte 2, Zeile 46) erfolgen, wohingegen aliphatische Kohlenwasserstoffe und cycloaliphatische Kohlenwasserstoffe zur Förderung der Kristallisation des Polycarbonats aus seinen Lösungen eingesetzt werden können (Spalte 3, Zeilen 18-24).

Gemäß der japanischen Patentpublikation Nr. 21 472/66 besteht die Möglichkeit, das Polycarbonat sofort in fester Form herzustellen, wenn man die Umsetzung mit Phosgen in Gegenwart von gegebenenfalls chlorierten aromatischen Kohlenwasserstoffen, oberflächenaktiven Stoffen und wäßriger Alkalilösung durchführt.

Gemäß US-Patent 3 530 094 können aromatische, aliphatische und cycloaliphatische Kohlenwasserstoffe zur Fällung von Polycarbonat aus seinen Lösungen eingesetzt werden (Spalte 6, Zeilen 60 ff), während Benzol und Toluol auch die organische Phase bei der Polycarbonatherstellung nach dem Phasengrenzflächenverfahren bilden können (Spalte 5, Zeilen 28-33).

Gemäß DE-OS 2 410 716 (Le A 15 514) wird Chlorbenzol als Lösungsmittel bei der Polycarbonatherstellung empfohlen, wobei jedoch Temperaturen > 70 °C eingehalten werden müssen.

Schließlich ist aus der DE-OS 3 429 960 (Le A 22 921) bekannt, daß man Polycarbonatlösungen mit Dämpfen von Benzol oder Alkylbenzolen behandelt und somit eine schonende Isolierung der Polycarbonate ermöglicht. Daraus ergibt sich, daß Benzol oder Alkylbenzole selbst als organische Phase bei der Phasengrenzflächenpolykondensation in der Praxis sich als ungeeignet herausgestellt haben.

Aus der DE-OS 2 940 024 (Le A 19 932) ist das Zweiphasengrenzflächenverfahren für die Herstellung von aromatischen Polyestern beschrieben. Als Lösungsmittel sind Dichlormethan, Chloroform, Tri- und Tetrachlorethylen, Tetrachlorethane, Chlorbenzole, Dichlorbenzole und Gemische dieser Verbindungen beschrieben (Seite 11, Zeilen 6-12 der DE-OS).

Aus der DE-OS 3 007 934 (Le A 20 203) ist das Zweiphasengrenzflächenverfahren für die Herstellung von aromatischen Polyestercarbonaten beschrieben. Als Lösungsmittel sind wiederum die vorstehend genannten, chlorhaltigen beschrieben (Seite 11, letzter Absatz der DE-OS).

Somit ergab sich, daß in der Praxis das Phasengrenzflächenverfahren in der Regel unter Verwendung der chlorhaltigen Verbindungen als Lösungsmittel durchgeführt wird, was jedoch für die Isolierung der thermoplastischen Polycarbonate noch gewisse Nachteile in sich birgt, so daß dafür jeweils spezielle, d. h. aufwendige Maßnahmen erforderlich sind (siehe dazu beispielsweise DE-OS 34 29 960).

Andererseits gewährt das erfindungsgemäße Verfahren bei der Herstellung von aromatischen Polyestern und Polyestercarbonaten den Vorteil, in ungewöhnlich hohen Konzentrationen arbeiten zu können, wodurch eine bessere Raum-Zeit-Ausbeute möglich ist. Das Problem der restlosen Entfernung der halogenierten Kohlenwasserstoffe steht hierbei nicht im Vordergrund.

Die erfindungsgemäß einzusetzenden aromatischen Kohlenwasserstoffe haben vorzugsweise 7 bis 15 C-Atome und entsprechen insbesondere der Formel (I).

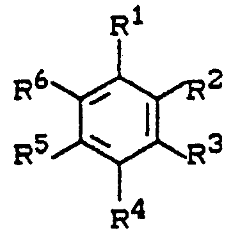

(I),

worin
$R^1$-$R^6$ unabhängig voneinander Wasserstoff oder gegebenfalls verzweigtes $C_1$-$C_{19}$-Alkyl, Phenyl oder $C_7$-$C_9$-Alkaryl/Aralkyl sind, wobei immer mindestens ein Rest $R^1$-$R^6$ kein Wasserstoff ist, und zwei orthoständige Reste $R^1$-$R^6$ einen gegebenenfalls substiutierten aromatischen oder cycloaliphatischen annellierten Ring bilden können.

Beispiele für aromatische Kohlenwasserstoffe sind Benzol, Toluol, Ethylbenzol, 1,2-Dimethylbenzol, 1,3-Dimethylbenzol, 1,4-Dimethylbenzol, 2-, 3- und 4-Ethyltoluol, Cumol, n-Propylbenzol, 1,2,3-Trimethylbenzol, 1,2,4-Trimethylbenzol, 1,3,5-Trimethylbenzol, i/n/sek./tert.-Butylbenzol, o/m/p-Cymol, 1,2-, 1,3- und 1,4-Diethylbenzol, 2-/3-/4-Methyl-n/i-propylbenzol, 1,2,3,4-Tetramethylbenzol, 1,2,3,5-Tetramethylbenzol, 1,2,4,5-Tetramethylbenzol, n-Amylbenzol, Isoamylbenzol, Pentamethylbenzol, 1-/2-Methylnaphthalin, 1-/2-Ethylnaphthalin, 1,2-/1,4-/1,6-/1,7-Dimethylnaphthalin, Hexamethylbenzol, Hexylbenzol, 1,3,5-Triethylbenzol, 1,2,5-Trimethylnaphthalin, 1,2,7-Trimethylnaphthalin und 1,3,5-Triisopropylbenzol, Tetralin, Ditolyl, Diphenyl. Bevorzugt sind: Toluol, Ethylbenzol, o/m/p-Xylol, 1,3,5-Trimethylbenzol, 1,3,5-Triisopropylbenzol.

Die erfindungsgemäß einzusetzenden gegebenenfalls verzweigten Alkane haben 5 bis 20 C-Atome vorzugsweise 5-12 C-Atome.

Beispiele für Alkane sind n/i-Pentan, n/i-Hexan, n/i-Heptan, n/i-Octan sowie deren Gemische wie sie auch z.B. bei der Destillation von Erdölfraktionen anfallen.

Die erfindungsgemäß einzusetzende Cycloalkane haben 5 bis 20 C-Atome und vorzugsweise 5-12 C-Atome.

Beispiele für Cycloalkane sind Cyclopentan, Cyclohexan, Ethylcyclopentan, Methylcyclohexan, Ethylcyclohexan, Tetralin und Dekalin, Cyclooctan, Cyclododecan.

Es können beliebige Kombinationen der genannten aromatischen Kohlenwasserstoffe mit den genannten Alkanen und/oder mit den Cycloalkanen verwendet werden. Geeignete Kombinationen sind beispielsweise
Toluol/Pentan, Toluol/Hexan, Toluol/Heptan, Toluol/i/n-Octan, Toluol/Cyclopentan, Toluol/Cyclohexan, Toluol/Petrolether, Toluol/Benzin, Xylol/Pentan, Xylol/Hexan, Xylol/Heptan, Xylol/i/n-Octan, Xylol/Cyclopentan, Xylol/Cyclohexan, Xylol/Petrolether, Xylol/Benzin, Mesitylen/Pentan, Mesitylen/Hexan, Mesitylen/i/n-Octan.

Bevorzugte Kombinationen sind beispielsweise Toluol/Pentan, Toluol/i-Octan, Toluol/Petrolether, Toluol/Benzin, Toluol/Cyclohexan, Xylol/i-Octan, Xylol/Petrolether, Xylol/Benzin, Xylol/Cyclohexan.

Die Menge an organischer Phase zur Durchführung des erfindungsgemäßen Verfahrens beträgt 300 ml bis 8000 ml pro Mol Diphenol, vorzugsweise 350 ml bis 5000 ml pro Mol Diphenol.

Die Reaktionstemperaturen für das Phasengrenzflächenverfahren liegen zwischen 0 ° C und 100 ° C, insbesondere zwischen 5 ° C und 50 C und insbesondere zwischen 5 ° C und 40 ° C, wobei selbstverständlich der Siedepunkt der Reaktionsgemische berücksichtigt werden muß und gegebenenfalls mit leichten Überdruck gearbeitet werden muß.

Die Reaktionszeiten für das Phasengrenzflächenverfahren liegen einschließlich Nachkondensationszeit zwischen 15 Min und 150 Min.

Die erfindungsgemäße Umsetzung erfolgt bei Drücken von 1 atm bis 6 atm, vorzugsweise bei Normaldruck.

Der pH-Wert der wäßrigen Phase des erfindungsgemäßen Zweiphasengrenzflächenverfahrens liegt zwischen 9 und 14, vorzugsweise zwischen 10 und 14. Die Menge an wäßriger Phase muß so bemessen sein, daß unter den gewählten Rührbedingungen Emulsionen erhalten werden.

Geeignete basische Materialien für die wäßrige Phase sind die üblichen, wie beispielsweise wäßriges Alkali oder wäßriges Erdalkali, vorzugsweise wäßriges Alkali und insbesondere wäßrige NaOH oder wäßrige KOH.

Die in dem erfindungsgemäßen Verfahren einsetzbaren Diphenole sind alle die, die unter den Reaktionsbedingungen des erfindungsgemäßen Phasengrenzflächenverfahrens keine reaktiven Substituenten haben, also außer den beiden phenolischen OH-Gruppen allenfalls nur unter den Re aktionsbedingungen

des erfindungsgemäßen Phasengrenzflächenverfahrens inerte Substituenten wie beispielsweise aromatisch gebundenes Chlor, Brom oder Alkyl.

Bevorzugte Diphenole sind Bis-(hydroxyaryl)-verbindungen, insbesondere solche mit 12 bis 21 C-Atomen.

Beispiele für Diphenole sind Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfoxide, Bis-(hydroxyphenyl)-sulfone und $\alpha,\alpha'$-Bis-(hydroxyphenyl)-diisopropylbenzole, 4,4'-Dihydroxydiphenyl, 4,4'-Dihydroxy-3,3',5,5'-tetramethyldiphenyl, 4,4'-Dihydroxy-3,3', 5,5'-tetrachlordiphenyl, Bis-(4-hydroxyphenyl)-methan, Bis-(4-hydroxy-3,5-dimethylphenyl)-methan, Bis-(4-hydroxy-3,5-dichlorphenyl)-methan, 2,2-Bis-(4-hydroxyphenyl)-propan, 2,2-Bis-(4-hydroxy-3,5-dimethylphenyl)-propan, 2,2-Bis-(hydroxy-3,5-dichlorphenyl)-propan, 1,1-Bis-(4-hydroxyphenyl)-cyclohexan, 1,1-Bis-(4-hydroxy-3,5-dimethylphenyl)-cyclohexan, 1,1-Bis-(4-hydroxy-3,5-dichlorphenyl)-cyclohexan, Bis-(4-hydroxyphenyl)-sulfon, Bis-(4-hydroxy-3,5-dichlorphenyl)-sulfon, Bis-(4-hydroxy-3,5-dimethylphenyl)-sulfon, Bis-(4-hydroxyphenyl)-sulfid, Bis-(4-hydroxy-3,5-dimethylphenyl)-sulfid, Bis-(4-hydroxy-3,5-dichlorphenyl)-sulfid, Bis-(4-hydroxyphenyl)-oxid, Bis-(4-hydroxy-3,5-dimethylphenyl)-oxid, Bis-(4-hydroxyphenyl)-keton und Bis-(4-hydroxy-3,5-dimethylphenyl)-keton.

Diese Diphenole sind entweder literaturbekannt oder nach literaturbekannten Verfahren erhältlich.

Bevorzugte Diphenole sind
2,2-Bis-(4-hydroxyphenyl)propan,
1,1-Bis-(4-hydroxyphenyl)cyclohexan,
Bis-(4-hydroxphenyl)sulfid,
Bis-(4-hydroxyphenyl)sulfon und
2,2-Bis-(4-hydroxy-3,5-dimethylphenyl)propan

Die Diphenole können sowohl einzeln, als auch im Gemisch von zwei oder mehr Diphenolen eingesetzt werden.

Erfindungsgemäß einsetzbare aromatische Dicarbonsäuredichloride sind vorzugsweise solche mit 8 bis 18 C-Atomen, insbesondere solche der Formel (IV,)

$Cl\underset{\underset{O}{\|}}{C}-Ar-\underset{\underset{O}{\|}}{C}-Cl$ (IV)

in der
Ar für einen aromatischen, gegebenenfalls substiutierten Rest mit 6-14 C-Atomen steht.

Geeignete aromatische Dicarbonsäuredihalogenide sind beispielsweise Terephthalsäuredichlorid, Isophthalsäuredichlorid, Phthalsäuredichlorid und Naphthalin-1,2-, -1,4, -1,5 oder -1,8-dicarbonsäuredichlorid.

Bevorzugt sind Terephthalsäuredichlorid und Isophthalsäuredichlorid sowie deren Gemische.

Erfindungsgemäß einsetzbare Kettenabbrecher sind Monophenole und Chloride von einbasischen Säuren, insbesondere von Monocarbonsäuren.

Geeignete Monophenole sind Phenole, p-tert.-Butylphenol, o-Kresol, m-Kresol, p-Kresol, 2-/3-/4-Ethylphenol, Cumol,

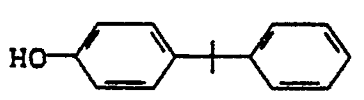 , 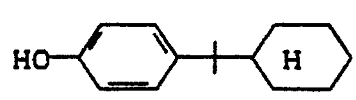 ,

p-Nonylphenol, p-Isooctylphenol, p-Chlorphenol, p-Bromphenol, $\beta$-Naphthol, $\alpha$-Naphthol.

Als Säurechloride können z. B. Acetylchlorid, Benzoylchlorid, Naphthoesäurechlorid oder die Chlorformiate der vorstehend genannten Phenole verwendet werden.

Die Mengen an Kettenabbrechern liegen zwischen 0,2 -10,0 Mol %, vorzugsweise 1,0 - 6,5 Mol %, bezogen auf die jeweils eingesetzten Mole Diphenole.

Es können sowohl die Monophenole allein, als auch die Säurechloride allein, aber auch Monophenole und Säurechloride gemeinsam, aber dann sukzessive eingesetzt werden.

Für das erfindungsgemäße Verfahren geeignete Verzweiger sind beispielsweise Polyhydroxyverbindungen mit drei oder mehr als drei phenolischen Hydroxygruppen.

Als Verzweigerkomponenten kommen die in den deutschen Offenlegungsschriften 1 570 533, 15 95 762, 21 16 974, 21 13 347 und 25 090 924 der britischen Patenschrift 1 079 821 und der US-Patentschrift 3 544 514 beschriebenen Verbindungen in Frage.

Einige der verwendbaren Verbindungen mit drei oder mehr als drei phenolischen Hydroxygruppen sind

beispielsweise Phloroglucin, 4,6-Dimethyl-2,4,6-tri-(4-hyroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(hydroxyphenyl-isopropyl)-phenol, 2,6-Bis-(2-hydroxy-5′-methyl-benzyl)-4-methylphenol, 2-(4-Hydroxyphenyl)-2-(2,4-dihydroxyphenyl)-propan und 1,4-Bis-(4,4″-dihydroxytriphenyl-methyl)-benzol. Einige der sonstigen dreifunktionellen Verbindungen sind Trimesinsäuretrichlorid, Cyanurchlorid, 3,3-Bis-(4-hydroxyphenyl)-2-oxo-2,3-dihydroindol und 3,3-Bis-(4-hydroxy-3-methylphenyl)-2-oxo-2,3-dihydroindol.

Die Menge an jeweils einsetzbarem Verzweiger beträgt zwischen 0,05 und 3,0 Mol %, vorzugsweise zwischen 0,1 und 1,5 Mol %, bezogen auf jeweils eingesetzte Diphenole.

Bei dem erfindungsgemäßen Verfahren kann für ausreichenden Molekulargewichtsaufbau auf Katalysatoren verzichtet werden. Die Verwendung von Katalysatoren beschleunigt jedoch bei einigen Diphenolen die Reaktionsgeschwindigkeit.

Für das erfindungsgemäße Verfahren geeignete Katalysatoren sind quartäre Ammoniumsalze, quartäre Phosphoniumsalze und tertiäre Amine.

Die Menge an Katalysator variiert je nach Art der eingesetzten Diphenole zwischen 0,2 - 10 Mol %, bei Einsatz von gegebenenfalls tetrasubstituierten Diphenolen zwischen 0,5 - 15 Mol %, bezogen jeweils auf die Gesamtmenge an eingesetzten Diphenolen.

Es können einzelne Katalysatoren als auch Gemische von verschiedenen Katalysatoren eingesetzt werden.

Für das erfindungsgemäße Verfahren geeignete quartäre Ammoniumsalze sind solche mit 4-50 C-Atomen und 1-3 N-Atomen, wie sie z.B. von E.V. Dehmlow, S.S. Dehmlow, "Phase Transfer Catalysis", Verlag Chemie, 1980, Weinheim, oder im US-Patent 3 275 601 beschrieben sind.

Für das erfindungsgemäße Verfahren geeignete quartäre Phosphoniumsalze sind solche mit 4 bis 50 C-Atomen.

Beispiele sind
Triphenylbenzylphosphoniumbromid/chlorid,
Tetraphenylphosphoniumbromid/chlorid,
Tributylmethylphosphoniumbromid/chlorid und
Tetrabutylphosphoniumbromid/chlorid.

Vorzugsweise eingesetzte Ammonium- oder Phosphoniumverbindungen sind Tetraethylammoniumchlorid/bromid, Tetrabutylammoniumchlorid/bromid, Triethylbenzylammoniumchlorid/bromid, Tricetylmethylammoniumchlorid/bromid, Tricaprylmethylammoniumchlorid/bromid, Triphenylbenzylphosphoniumchlorid/bromid, Tributylmethylphosphoniumchlorid/bromid, sowie auch Gemische dieser Verbindungen.

Für das erfindungsgemäße Verfahren geeignete tertiäre Amine können sowohl cyclisch als auch offenkettig sein. Vorzugsweise geeignet sind aliphatische tertiäre Amine, beispielsweise solche mit 1 oder 2 N-Atomen und 3 bis 24 C-Atomen. Folgende Amine seien beispielsweise genannt:
Trimethylamin, Triethylamin, Tributylamin, Trihexylamin, Dimethylbenzylamin, Triethylendiamin, Tetramethylethylendiamin, Permethyldiethylentriamin, N,N-Dimethylcyclo hexylamin, N-Ethylpiperidin, 1,4-Dimethylpiperazin, 4-Methyl-morpholin, 4,4′-(1,2-Ethandiyl)-bis-morpholin und 1,2-Diazabicyclo-(2,2,2)-octan.

Die Zugabe der Katalysatoren erfolgt in bekannter Weise entweder vor oder während oder nach der Phosgenierung beziehungsweise der Säurechloridzugabe.

Geeignete Reduktionsmittel sind beispielsweise Natriumsulfit oder Natriumborhydrid. Die Reduktionsmittel werden in Mengen von 0,25-2 Mol-%, bezogen auf Mole Diphenole, eingesetzt.

In dem erfindungsgemäßen Verfahren können anstelle von Phosgen auch $COBr_2$ sowie Bishalogenformiate der Diphenole eingesetzt werden, beispielsweise die Bischlorformiate von 2,2-Bis-(4-hydroxyphenyl)-propan oder von 2,2-Bis-(4-hydroxy-3,5-dimethylphenyl)-propan, aber auch beispielsweise die Bischlorformiate der Bisdiphenolester von aromatischen Dicarbonsäuren.

Es können auch Bishalogenformiate von aromatischen Oligocarbonaten und Bissäurebishalogenide von aromatischen Oligoestern aus aromatischen Dicarbonsäuren und Diphenolen eingesetzt werden.

Die Menge an Phosgen, bezogen auf phenolisches OH, die zur Durchführung des erfindungsgemäßen Verfahrens erfor derlich ist, kann bei der Synthese von aromatischen Polycarbonaten zwischen 100-200 Mol-% vorzugsweise 110-150 Mol-%, liegen.

Entsprechendes gilt bei Einsatz von Bishalogenformiaten.

Die Menge an Dicarbonsäuredihalogenid, bezogen auf phenolisches OH, die zur Durchführung des erfindungsgemäßen Verfahrens erforderlich ist, kann bei der Synthese von aromatischen Polyestern zwischen 98-103 Mol-% vorzugsweise 99-102 Mol-% liegen.

Entsprechendes gilt bei Einsatz von Bissäurebishalogeniden von aromatischen Oligoestern.

Das Verhältnis von Carbonat zu Dicarbonsäurediester-Strukturen bei der erfindungsgemäßen Synthese von aromatischen Polyestercarbonaten kann zwischen 1:25 und 25:1, vorzugsweise zwischen 1:20 und 10:1, Carbonat:Dicarbonbsäurediester liegen.

Dabei wird die Umsetzung der Dicarbonsäuredichloride vorzugsweise vor der Phosgenierung vorgenommen und das Phosgen mit Überschüssen von 10 bis 50 Mol-%, berechnet auf die stöchiometrisch einzusetzende Menge, verwendet.

Das erfindungsgemäße Verfahren führt in der Regel zu einem heterogenen Gemisch, kann aber in einem normalen Rührkessel durchmischt werden oder aber auch auf Knetern, wie sie z. B. im Kautschukbereich üblich sind. Die Aufarbeitung des Polycarbonats beziehungsweise des Polyestercarbonats beziehungsweise des Polyesters kann zum Beispiel nach Abtrennen der flüssigen Phase durch Auflösen dieser Polykondensate in leicht entfernbaren Lösungsmitteln, durch anschließende übliche Waschvorgänge und durch übliche Isolierung erfolgen.

Die Aufarbeitung der Polykondensate kann aber auch nach Abrennung der organischen und der anorganischen Phase durch direkte Wäsche der in gequollenem Zustand vorliegenden Reaktionsprodukte mit Säuren, wie beispielsweise Phosphorsäure oder Salzsäure, und Wasser erfolgen, was vorzugsweise auf einem Kneter durchgeführt wird. Anschließend erfolgt Trocknung der so gewaschenen Produkte.

Ferner kann die organische Phase durch Wasserdampfdestillation abgetrennt werden.

Die nach dem erfindungsgemäßen Verfahren erhältlichen thermoplastischen aromatischen Polycarbonate können mittlere Gewichtsmittelmolekulargewichte von 8000 bis 50 000 haben. (Gemessen durch Gelpermeationschromatographie).

Sie können in üblicher Weise stabilisiert, eingefärbt, gefüllt, pigmentiert, flammgeschützt oder mit anderen Polymeren modifiziert werden.

Die technische Brauchbarkeit der nach dem erfindungsgemäßen Verfahren erhältlichen thermoplastischen Polycarbonate ist bekannt, sie kann beispielsweise im Elektrosektor oder im Automobilsektor erfolgen.

Die nach dem erfindungsgemäßen Verfahren erhältlichen, thermoplastischen, aromatischen Polyestercarbonate können mittlere Gewichtsmittelmolekulargewichte von 8000 bis 50 000 haben. (Gemessen durch Gelpermeationschromatographie.

Sie können in üblicher Weise stabilisiert, eingefärbt, gefüllt, pigmentiert, flammgeschützt oder mit anderen Polymeren modifiziert werden.

Die technische Brauchbarkeit der nach dem erfindungsgemäßen Verfahren erhältlichen thermoplastischen Polyestercarbonate ist bekannt, sie kann beispielsweise im Elektrosektor oder im Automobilsektor erfolgen.

Die nach dem erfindungsgemäßen Verfahren erhältlichen, thermoplastischen, aromatischen Polyester können mittlere Gewichtsmittelmolekulargewichte von 8000 bis 50 000 haben. (Gemessen durch Gelpermeationschromatographie).

Sie können in üblicher Weise stabilisiert, eingefärbt, gefüllt, pigmentiert, flammgeschützt oder mit anderen Polymeren modifiziert werden.

Die technische Brauchbarkeit der nach dem erfindungsgemäßen Verfahren erhältlichen thermoplastischen Polyester ist bekannt, sie kann beispielsweise im Elektrosektor oder im Automobilsektor erfolgen.

## Beispiele

### Beispiel 1

In einem mit Rührer, Thermometer, Kühler und Einleitungsrohr versehenen Rundkolben werden 125 ml Toluol, 125 ml i-Octan, 400 ml $H_2O$, 20 g (0,5 Mol) Natronlauge, 22,8 g (0,1 Mol) 2,2-Bis-(4-hydroxyphenyl)-propan als zweiphasiges System vorgelegt, auf 10 °C abgekühlt und für die Dauer des Versuches bei dieser Temperatur gehalten. Anschließend werden 14,85 g (0,15 Mol) Phosgen in 30′ eingeleitet. Anschließend 2 h auf einem Laborkneter nachkondensiert.

Reste des Lösungsmittels und die anorganische Phase werden abgetrennt. Anschließend wird das gequollenen Polymer einmal mit verd. Phosphorsäure und 6 x mit destilliertem Wasser auf dem Kneter gewaschen und 10 h bei 80 °C im Vakuumtrockenschrank getrocknet.

Ausbeute: 22,6 g

$\eta_{rel}$ = 1,387, nach 1 h Nachkondensation

$\eta_{rel}$ = 1,418, nach 2 h Nachkondensation

Beispiel 2

Wie Beispiel 1, jedoch mit 75 ml Toluol und 75 ml i-Octan bei 20° C.
Ausbeute: 22,7 g
$\eta_{rel}$ = 1,369, nach 2 h Nachkondensation

Beispiel 3

Wie Beispiel 1, jedoch werden nach dem Einleiten von Phosgen 1,0 Mol-% N-Ethylpiperidin als Katalysator zugegeben. Der Versuch wurde bei 20° C durchgeführt.
Ausbeute: 22,8 g
$\eta_{rel}$ = 1,401, nach 2 h Nachkondensation

Beispiel 4

Wie Beispiel 3, jedoch zusätzlich 2,0 Mol-% p-tert.-Butylphenol als Kettenabbrecher vorgelegt. Ausbeute: 23,5 g
$\eta_{rel}$ = 1,220, nach 2 h Nachkondensation

Beispiel 5

Wie Beispiel 1, jedoch 0,1 Mol-% Tetrabutylammoniumbromid als Katalysator und 2 Mol-% p-tert.-Butylphenol als Kettenabbrecher mit vorgelegt.
Ausbeute: 21,6 g
$\eta_{rel}$ = 1,302, nach 2 h Nachkondensation

Beispiel 6

350 ml Toluol, 100 ml i-Octan werden in einem Rundkolben zusammen mit 500 ml Wasser, 10 g (0,25 Mol) Natriumhydroxid, 22,8 g (0,1 Mol) Bisphenol A, 0,75 g (5 Mol %) p tert.-Butylphenol bei 10° C vorgelegt. 20,7 g (0.102 Mol) eines 1:1 Gemisches aus Tere- und Isophthalsäuredichlorid gelöst in 50 ml Toluol werden unter Rühren in 15 Minuten eingetropft. Man läßt 1 Stunde bei Raumtemperatur nachkondensieren. Aufarbeitung wie Beispiel 1
Ausbeute 27.6 g, $\eta_{rel}$ = 1.306

Beispiel 7

In einem Laborkneter werden 175 ml Toluol, 50 ml i-Octan und 61,3 g (0.302 Mol) eines 1:1 Gemisches aus Tere- und Isophthalsäuredichlorids gelöst in 150 ml Toluol vorgelegt. 67,4 g (0.3 Mol) Bisphenol A, 0.9 g (2 Mol %) p-tert-Butylphenol, 26 g (0.65 Mol) Natriumhydroxid gelöst in 400 ml $H_2O$ werden in 15 Min. eingetropft. Anschließend wird 1 Mol % N-Ethylpiperidin zugegeben und 30 Minuten bei Raumtemperatur nachkondensiert. Das ausgefallene Polymer wird in Methylenchlorid gelöst und mit verdünnter Phosphorsäure (1 x) und Wasser (6 x) gewaschen. Danach wird in Methanol gefällt und 10 h bei 80° C im Vakuum getrocknet.
Ausbeute 105,5 g $\eta_{rel}$ = 1.234

**Ansprüche**

1. Verfahren zur Herstellung von aromatischen Polycarbonaten, aromatischen Polyestercarbonaten und aromatischen Polyestern nach dem bekannten Zweiphasengrenzflächenverfahren in Gegenwart von wäßriger und von organischer Phase durch Umsetzung von Diphenolen mit Phosgen und/oder mit aromatischen Dicarbonsäuredihalogeniden, gegebenenfalls unter Mitverwendung von monofunktionellen Kettenabbrechern

und gegebenenfalls unter Mitverwendung von dreifunktionellen oder mehr als dreifunktionellen Verzweigern, gegebenenfalls in Gegenwart von Katalysatoren und/oder gegebenenfalls in Anwesenheit von Reduktionsmitteln, dadurch gekennzeichnet, daß als organische Phase eine Mischung aus 5 bis 95 Gew.-% an aromatischen Kohlenwasserstoffen mit 95 bis 5 Gew.-% an Alkanen und/oder an Cycloalkanen eingesetzt wird.

2. Verfahren gemäß Anspruch 1, dadurch gekennzeichnet, daß als organische Phase 30 bis 90 Gew.-% an aromatischen Kohlenwasserstoffen mit 70 bis 10 Gew.-% an Alkanen und/oder an Cycloalkanen eingesetzt wird.

3. Verfahren gemäß Anspruch 1, dadurch gekennzeichnet, daß als organische Phase 50 bis 85 Gew.-% an aromatischen Kohlenwasserstoffen und 50 bis 15 Gew.-% an Alkanen und/oder an Cycloalkanen eingesetzt wird.